# EUROPÄISCHE PATENTANMELDUNG

(11) **EP 2 713 155 A1**
(43) Veröffentlichungstag der Anmeldung: **02.04.2014**
(21) Anmeldenummer: 12186766.7
(22) Anmeldetag: 01.10.2012
(51) Int. Cl.: G01N 21/95

(54) **Vorrichtung sowie Verfahren zur visuellen Prüfung einer Eintritts- bzw. Austrittskante des Schaufelblatts einer Turbinenschaufel**

(71) Anmelder: Siemens Aktiengesellschaft, 80333 München (DE)
(72) Erfinder: Jakielski, Sebastian, 46238 Bottrop (DE); Obermayr, Stefan, 45475 Mülheim (DE)

(57) **Zusammenfassung**

Offenbart und beschrieben ist eine Vorrichtung zur visuellen Prüfung einer Eintritts- bzw. Austrittskante des Schaufelblatts (2) einer Turbinenschaufel, umfassend:
- einen U-förmigen Positionierkörper (1), wobei zwischen den beiden U-Schenkeln (1a, 1b) ein Aufnahmeraum für den zu prüfenden Bereich der Eintritts- bzw. Austrittskante vorgesehen ist, dessen Innenkontur an die Außenkontur der Eintritts- bzw. Austrittskante angepasst ist, so dass der Positionierköper (1) um diese legbar ist, und
- eine Bilderfassungseinrichtung (3) mit wenigstens einem optischen Sensor, die an dem Positionierkörper (1) vorgesehen ist,

wobei die Bilderfassungseinrichtung (3) derart an dem Positionierkörper (1) angeordnet ist, dass der optische Sensor in den Aufnahmeraum gerichtet ist, um Bilder von einer in dem Aufnahmeraum befindlichen Eintritts- bzw. Austrittskante erstellen zu können, und die Bilderfassungseinrichtung (3) bewegbar an dem Positionierkörper (1) gehalten ist, so dass eine Abtaststrecke abgefahren werden kann.

## Beschreibung

Die Erfindung betrifft eine Vorrichtung zur visuellen Prüfung einer Eintritts- bzw. Austrittskante des Schaufelblatts einer Turbinenschaufel. Darüber hinaus betrifft die Erfindung ein Verfahren zur visuellen Prüfung einer Eintritts- bzw. Austrittskante des Schaufelblatts einer Turbinenschaufel, bei dem eine derartige Vorrichtung zum Einsatz kommt. Die Erfindung betrifft ferner einen Positionierkörper, insbesondere zur Positionierung einer Bilderfassungseinrichtung an einer vorgegebenen Position an einer zu prüfenden Eintritts- bzw. Austrittskante des Schaufelblatts einer Turbinenschaufel sowie ein Verfahren zur Herstellung eines solchen Positionierkörpers.

Turbinenschaufeln unterliegen betriebsbedingten Abnutzungen und Zerstörungen. Insbesondere kann es an der Eintritts- sowie an der Austrittskante des Schaufelblattes betriebsbedingt zu einer unerwünschten Materialabtragung kommen, durch welche die Funktion und der Wirkungsgrad des gesamten Systems negativ beeinträchtigt werden. Beispiele für derartige Schäden an den Eintritts- bzw. Austrittskanten sind die Tropfenschlagerosion, insbesondere an Turbinenschaufeln in der letzten Stufe einer Dampfturbine auftretende Kavitationsschäden oder durch das Befeuerungsmedium bedingter abrasiven Abtrag in Gasturbinen und Strahltriebwerken.

Die Entwicklung der betriebsbedingten Materialabtragung verhält sich nicht linear mit der Zeit und sollte daher in regelmäßigen Abständen überwacht werden, um frühzeitig dem Ausfall eines betroffenen Bauteils vorbeugen zu können. Darüber hinaus birgt die Verwendung beschädigter Bauteile hohe Risiken für den Betrieb, die nur reduziert werden können, wenn eine regelmäßige Überprüfung stattfindet.

Eine Möglichkeit der Überwachung von Materialabtragungen an Bauteilen ist durch Rauhigkeitsmess-Verfahren gegeben. An den Eintritts- und Austrittskanten der Schaufelblätter von Turbinenschaufeln ist die Anwendung eines derartigen Verfahrens jedoch nicht möglich. Dies liegt zum einen daran, dass die Erosionsspuren in der Regel zu tief sind, um noch von bekannten Rauhigkeitsmessgeräten erfasst werden zu können. Zum anderen macht die komplexe Geometrie der Turbinenschaufel im betroffenen Bereich eine Messung unter reproduzierbaren Bedingungen, wie sie für repräsentative Messergebnisse erforderlich ist, mit den bekannten Geräten unmöglich.

Daher wird die zeitliche Entwicklung der Materialabtragung bisher überwacht, indem nach Stilllegung der Anlage der betroffene Bereich der Turbinenschaufeln von einem Prüfer in Augenschein genommen wird und dieser die Schädigung visuell abschätzt.

Um vergleichbare Messergebnisse zu erhalten ist es - insbesondere, wenn die Entwicklung des Materialabtrags über einen längeren Zeitraum beobachtet werden soll und daher eine Überprüfung in zeitlichen Abständen wiederholt werden muss - jedoch erforderlich, dass die Prüfung unter gleichbleibenden Bedingungen durchgeführt wird. Eine visuelle Prüfung durch in Augenscheinnahme kann diese Anforderung nicht erfüllen, da nur eine subjektive Beurteilung durch einen menschlichen Prüfer erfolgt.

Ausgehend von diesem Stand der Technik ist es eine Aufgabe der vorliegenden Erfindung, ein Verfahren sowie eine Vorrichtung anzugeben, mittels derer eine visuelle Prüfung der Eintritts- und Austrittskanten des Schaufelblattes einer Turbinenschaufel erfolgen kann, wobei zuverlässige Messergebnisse geliefert werden.

Diese Aufgabe wird gelöst durch eine Vorrichtung zur visuellen Prüfung einer Eintritts- bzw. Austrittskante des Schaufelblatts einer Turbinenschaufel, umfassend:
- wenigstens einen im Querschnitt eine U-förmige Grundform aufweisenden Positionierkörper, wobei zwischen den beiden U-Schenkeln ein Aufnahmeraum für den zu prüfenden Bereich der Eintritts- bzw. Austrittskante des Schaufelblattes vorgesehen ist, dessen Innenkontur an die Außenkontur der Eintritts- bzw. Austrittskante des Schaufelblattes angepasst bzw. anpassbar ist, so dass der Positionierköper in einer vorgegebenen Position um die Eintritts- bzw. Austrittskante legbar ist, und
- eine Bilderfassungseinrichtung mit wenigstens einem optischen Sensor, die an dem Positionierkörper vorgesehen ist,
wobei die Bilderfassungseinrichtung derart an dem Positionierkörper angeordnet ist, dass der wenigstens eine optische Sensor in den Aufnahmeraum gerichtet ist, um Bilder von einer in dem Aufnahmeraum befindlichen Eintritts- bzw. Austrittskante erstellen zu können, und wobei die Bilderfassungseinrichtung bewegbar an dem Positionierkörper gehalten ist, so dass eine Abtaststrecke von dieser abgefahren werden kann.

Des Weiteren wird die Aufgabe gelöst durch ein Verfahren zur visuellen Prüfung einer Eintritts- bzw. Austrittskante des Schaufelblatts einer Turbinenschaufel, umfassend die folgenden Schritte:
1) eine erfindungsgemäße Vorrichtung wird bereitgestellt,
2) der Positionierkörper wird an dem zu prüfenden Bereich des Schaufelblatts vorgesehen, so dass die Bilderfassungseinrichtung in einer vorgegebenen Position an der Eintritts- bzw. Austrittskante positioniert wird,
3) mit dem wenigstens einen optischen Sensor der Bilderfassungseinrichtung werden Bilder von der Eintritts- bzw. Austrittskante gemacht, wobei die Bilderfassungseinrichtung entlang des Positionierkörpers insbesondere geradlinig bewegt wird, um den gesamten zu prüfenden Bereich zu erfassen, und
4) die mit der Bilderfassungseinrichtung gemachten Bilder werden von der Steuerungseinrichtung verarbeitet, insbesondere zu einem Gesamtbild der Oberfläche der Eintritts- bzw. Austrittskante des Schaufelblatts in dem geprüften Bereich zusammengefügt und ausgegeben.

Die Grundidee der Erfindung besteht somit darin, von der zu prüfenden Eintritts- bzw. Austrittskante optische Aufnahmen mittels einer Bilderfassungseinrichtung zu erstellen, wobei die Bilderfassungseinrichtung mittels eines Positionierkörpers, der in der Art eines Formschuhs ausgebildet ist, wiederholbar an einer vorgegebenen Stelle relativ zu der Kante positionierbar ist. Der Positionierkörper weist zu diesem Zweck einen Aufnahmeraum für den zu prüfenden Teilbereich der Kante auf, welcher deren Außenkontur entspricht. Durch die individuell an das zu prüfende Bauteil angepasste Geometrie des Positionierkörpers wird gewährleistet, dass der Positionierkörper und mit diesem die Bilderfassungseinrichtung wiederholbar an eine vorgegebene Stelle an das Bauteil anlegbar ist.

Für einen Prüfvorgang wird der Betrieb der Turbine unterbrochen, und der individuell angepasste Positionierkörper wird an die zu prüfende Stelle gelegt. Der Positionierkörper weist zur Umgreifung der Kante eine im Wesentlichen U-förmige Grundform auf, wobei zwischen den beiden U-Schenkeln ein an die Geometrie der zu prüfenden Kante angepasster Aufnahmeraum vorgesehen ist. Durch diese angepasste Geometrie ist der Positionierkörper an einer genau vorgegebenen Position an die Kante legbar. Um einen besonders sicheren Sitz des Positionierkörpers an dem Bauteil zu ermöglichen, kann im Bereich des Aufnahmeraumes eine rutschfeste Beschichtung versehen sein. Darüber hinaus kann der Positionierkörper mit zusätzlichen Fixiermitteln an dem Bauteil befestigt werden.

Nach der Anbringung des Positionierkörpers können mittels der Bilderfassungseinrichtung Bilder von der Oberfläche der Eintritts- bzw. Austrittskante erstellt werden, um den Zustand der Eintritts- bzw. Austrittskante zu überprüfen. Dadurch, dass die Bilderfassungseinrichtung - analog zu einem Linearscanner - bewegbar, insbesondere geradlinig bewegbar entlang der Abtaststrecke an dem Positionierkörper gehalten ist, kann diese entlang der zu prüfenden Kante verfahren werden, um Bilder von der Kante zu erstellen. Die Abtaststrecke ist dazu zweckmäßiger Weise derart orientiert, dass sie im Wesentlichen parallel zu der zu prüfenden Kante des Schaufelblatts orientiert werden kann. Die Bilderfassungseinrichtung ist darüber hinaus vorteilhafter Weise derart an dem Positionierkörper angeordnet, dass der optische Sensor in einen geringen Abstand zu der Kante bringbar ist.

Durch die erfindungsgemäße Positionierung der Bilderfassungseinrichtung können unter reproduzierbaren Messbedingungen Bilder von dem zu prüfenden Bauteil erstellt werden, und es kann somit eine zuverlässige Prüfung von diesem erfolgen.

Um die zeitliche Entwicklung der Abnutzung bzw. der betriebsbedingten Zerstörungen an der Eintritts- bzw. Austrittskante überprüfen zu können, werden die Schritte 1 bis 4 des erfindungsgemäßen Verfahrens mehrere Male jeweils nach Ablauf einer vorgegebenen Betriebsdauer an dem gleichen Bauteil wiederholt, und die jeweils aufgenommenen Bilder und/oder die daraus erstellten Gesamtbilder werden miteinander verglichen. Durch die Verwendung des erfindungsgemäßen Positionierkörpers wird dabei gewährleistet, dass die zu unterschiedlichen Zeitpunkten durchgeführten Messungen unter reproduzierbaren Bedingungen durchgeführt werden.

In vorteilhafter Ausgestaltung wird der Vergleich der Bilder und/oder der Gesamtbilder der nacheinander mit zeitlichem Abstand durchgeführten Messungen in an sich bekannter Weise computergestützt durchgeführt.

Der Verschleiß des Bauteils und dessen zeitliche Entwicklung können durch die wiederholten Messungen unter exakt gleichen Bedingungen auch qualitativ bewertet werden, was bei einer visuellen Kontrolle durch einen menschlichen Prüfer gemäß dem Stand der Technik nicht möglich ist. Beschädigte Bauteile können so frühzeitig erkannt und ausgetauscht werden, wodurch die Betriebssicherheit der gesamten Turbinenanlage erhöht wird. Insbesondere können, indem mehrere zeitlich beabstandete Messvorgänge erfindungsgemäß durchgeführt werden, zuverlässig Informationen über die zeitliche Entwicklung des Bauteil-Verschleißes erhalten werden.

Über die zeitabhängigen Messdatenkönnen ferner die Einflüsse verschiedener Betriebszustände auf den Verschleiß genau bestimmt werden. Die optimalen Bedingungen für die Stromerzeugung beispielsweise können sich von den optimalen Bedingungen für den Materialverschleiß, also der geringstmöglichen Materialbelastung, deutlich unterschieden. Über die erfindungsgemäß gewonnenen exakten zeitabhängigen Messdaten können die individuellen Einflüsse untersucht und die Betriebsbedingungen - auch hinsichtlich verschiedener Parameter- optimiert werden.

Es ist auch möglich, eine Aussage darüber zu treffen, wann ein Bauteil voraussichtlich getauscht werden muss, so dass ein störungsfreier Betrieb der Turbinenanlage gewährleistet werden kann. Dies gilt auch für den Fall, dass eine nichtlineare zeitliche Entwicklung des Verschleißes gegeben ist, wobei die zeitabhängig ermittelten Messdaten dann beispielsweise extrapoliert werden, um eine Prognose zu machen.

Die bewegbare Halterung der Bilderfassungseinrichtung an dem Positionierkörper kann konstruktiv insbesondere mittels eines Schlittens realisiert werden, der entlang des Positionierkörpers verfahrbar gehalten ist und an dem die Bilderfassungseinrichtung vorgesehen ist. Dabei kann den Schlitten ein Antrieb, insbesondere ein Elektromotor zum automatischen Verfahren zugeordnet sein.

Der Schlitten kann dabei über zwei an dem Positionierkörper vorgesehene Halte- und Führungsstege bewegbar gehalten sein und in seiner Bewegung geführt werden.

Die Bilderfassungseinrichtung kann an der Innenseite des Positionierkörpers, also an der in den Aufnahmeraum weisenden Seite vorgesehen sein, damit Bilder von der Oberfläche des zu prüfenden Bauteils erstellt werden können. Alternativ kann die Bilderfassungseinrichtung außenseitig an dem Positionierkörper gehalten sein. Für diesen Fall weist der Positionierkörper eine als Sichtfenster in den Aufnahmeraum dienende längliche Durchgriffsöffnung auf, durch die von dem wenigstens einen optischen Sensor der Bilderfassungseinrichtung Bilder von der Eintritts- bzw. Austrittskante gemacht werden können. Die Durchgriffsöffnung erstreckt sich dabei zumindest im Wesentlichen parallel zu der Bewegungsrichtung der Bilderfassungseinrichtung, sodass über die gesamte Abtaststrecke der Blick in Richtung des Aufnahmeraums durch den Positionierkörper frei ist.

Bei der erfindungsgemäß zum Einsatz kommenden Bilderfassungseinrichtung kann es sich um eine beliebige Einrichtung handeln, mittels derer in an sich bekannter Weise optische Aufnahmen von der Oberfläche des zu prüfenden Bauteils erstellt werden können. Dazu umfasst die Bilderfassungseinrichtung einen optischen Sensor, mittels dem Licht, welches von der Oberfläche des zu untersuchenden Bauteils reflektiert wird, detektiert werden kann.

In vorteilhafter Ausgestaltung der Erfindung kann - analog zu einem Linearscanner - der optische Sensor der Bilderfassungseinrichtung wenigstens eine Photodiodenzeile und insbesondere eine vor der Photodiodenzeile angeordnete Stablinse umfassen. Photodiodenzeilen haben sich als geeignete eindimensionale optische Sensoren erwiesen. Indem die Photodiodenzeile über den zu prüfenden Bereich der Eintritts- bzw. Austrittskante gefahren wird kann genau wie einem bekannten Linearscanner eine Vielzahl von nebeneinanderliegenden Zeilenaufnahmen erstellt werden, die dann zu einer zweidimensionalen Aufnahme zusammengesetzt werden. Die Photodiodenzeile ist dabei zweckmäßigerweise im Wesentlichen senkrecht zu der Bewegungsrichtung der Bilderfassungseinrichtung entlang des Positionierkörpers angeordnet.

In Weiterbildung der Erfindung ist - ebenfalls analog zu einem Linearscanner - vorgesehen, dass die Bilderfassungseinrichtung eine Beleuchtungseinheit zur Ausleuchtung der Eintritts- bzw. Austrittskante in den zu prüfenden Bereich umfasst. Über die Beleuchtungseinheit wird gewährleistet, dass in ausreichendem Maße Licht zur Oberfläche des Bauteils gelangt, welches von dieser reflektiert wird und von der Bilderfassungseinrichtung, insbesondere von dem optischen Sensor detektiert werden kann. Im Ergebnis können gute Bilder mit ausreichender Helligkeit aufgenommen werden.

Die Bilderfassungseinrichtung kann ferner eine Kamera umfassen, um in an sich bekannter Weise Bilder zu erstellen.

Gemäß einer bevorzugten Ausführungsform der Erfindung ist die Bilderfassungseinrichtung ausgebildet, um Bilder einer Auflösung von wenigstens 600 dpi (dots per inch) zu erstellen. Auf diese Weise wird gewährleistet, dass Bilder ausreichend hoher Qualität zur Verfügung stehen und die Überprüfung der Eintritts- bzw. Austrittskante auf Beschädigungen sehr genau erfolgen kann.

Eine weitere Ausführungsform der Erfindung zeichnet sich dadurch aus, dass eine Steuerungseinrichtung vorgesehen ist. Diese ist insbesondere ausgebildet, um die Bilderfassungseinrichtung, vor allem den wenigstens einen optischen Sensor zu steuern. Darüber hinaus kann die Steuerungseinrichtung ausgebildet sein, um die Bewegung der Bilderfassungseinrichtung zu steuern. Die Prüfung des Bauteils kann auf diese Weise automatisiert erfolgen, wofür die Steuerungseinrichtung insbesondere programmierbar ist.

In Weiterbildung der Erfindung ist vorgesehen, dass der Positionierkörper mittels eines Stereolithografie-Verfahrens hergestellt oder herstellbar ist. So ist es möglich, den Positionierkörper lediglich anhand einer Zeichnung von der Oberfläche der zu prüfenden Eintritts- bzw. Austrittskante bzw. des zu prüfenden Schaufelblatts herzustellen und diesen an die Kontur des Bauteils in dem zu prüfenden Bereich anzupassen. Der Positionierkörper kann auf einfache Weise auch an besonders komplexe Bauteil-Geometrien angepasst werden.

Vorzugsweise ist der Positionierkörper aus wenigstens einem Material hergestellt oder herstellbar, welches durch eine Behandlung mittels ultravioletten Lichts härtbar ist.

Der Positionierkörper kann aus einem Epoxidharz hergestellt oder herstellbar sein.

Eine weitere Ausführungsform der vorliegenden Erfindung zeichnet sich dadurch aus, dass der Positionierkörper mehrteilig ausgebildet ist. Der Positionierkörper kann beispielsweise aus zwei Teilen bestehen, die bewegbar, insbesondere mittels eines Scharniers miteinander verbunden sind. So kann der Positionierkörper vor dem Anlegen an das Bauteil aufgeklappt und durch zusammenklappen an das Bauteil angelegt werden kann. Diese Ausführungsform ist insbesondere zweckmäßig, wenn das Bauteil eine komplexe Geometrie aufweist, und ein Aufschieben das Positionierkörpers auf das Bauteil nicht möglich ist.

Der Positionierkörper kann insbesondere durch die folgenden Verfahrensschritte erhalten werden:
- wenigstens ein im Querschnitt eine U-förmige Grundform aufweisender Grundkörper, der zwischen den beiden U-Schenkeln ein Aufnahmeraum für den zu prüfenden Bereich der Eintritts- bzw. Austrittskante des Schaufelblattes aufweist, wird bereitgestellt, wobei der Grundkörper zumindest im Bereich des Aufnahmeraums aus einem weichen Material besteht, welches insbesondere mittels UV-Strahlung aushärtbar ist,
- der Grundkörper wird derart an eine vorgegebenen Position des zu prüfenden Schaufelblattes gelegt, dass das weiche Material an die Außenkontur der Eintritts- bzw. Austrittskante in dem zu prüfenden Bereich angepasst wird,
- der Grundkörper wird von der Eintritts- bzw. Austrittskante entfernt, und
- das weiche Material wird insbesondere mittels UV-Strahlung ausgehärtet, um einen passgenau an die Außenkontur der Eintritts- bzw. Austrittskante angepassten Positionierkörper zu erhalten.

Dadurch, dass der Grundkörper zumindest im Bereich des Aufnahmeraums aus einem flexiblem Material besteht, kann er durch bloßes Anlegen an das Bauteil in dem zu prüfenden Bereich individuell an das Bauteil angepasst werden. Es wird praktisch zunächst ein Abdruck des Bauteils gefertigt. Durch anschließendes Aushärten des flexiblen Materials wird ein Positionierkörper mit einer individuell an das zu prüfende Bauteil angepassten Geometrie erhalten. Im Ergebnis kann auf besonders einfache Weise und sehr zügig ein passender Positionierkörper für ein Bauteil erhalten werden.

Hinsichtlich weiterer vorteilhafter Ausgestaltungen und Weiterbildungen der Erfindung wird auf die Unteransprüche sowie nachfolgende Beschreibung eines Ausführungsbeispieles unter Bezugnahme auf die beiliegende Zeichnung verwiesen. In der Zeichnung zeigt die einzige Figur eine erfindungsgemäße Vorrichtung zur visuellen Prüfung einer Eintritts- bzw. Austrittskante des Schaufelblattes einer Turbinenschaufel.

Die erfindungsgemäße Vorrichtung umfasst einen mittels eines Stereolithographie-Verfahrens hergestellten Positionierkörper 1, der hier an der Eintrittskante eines Schaufelblattes 2 gelegt ist. Der Positionierkörper weist eine im Querschnitt U-förmige Grundform auf und umfasst einen in der Zeichnung vor dem Schaufelblatt 2 befindlichen vorderen U-Schenkel 1a sowie einen hinter dem Schaufelblatt 2 befindlichen hinteren U-Schenkel 1b. Zwischen den beiden Schenkeln 1a, 1b ist ein Aufnahmeraum für den zu prüfenden Bereich der Eintrittskante des Schaufelblattes 2 vorgesehen. Die Innenkontur des Aufnahmeraums ist bei dem dargestellten Ausführungsbeispiel passgenau an die Außenkontur der Eintrittskante angepasst, und der Positionierkörper 1 ist in einer vorgegebenen Position um die Eintrittskante gelegt.

Die erfindungsgemäße Vorrichtung umfasst ferner eine außenseitig an dem Positionierkörper 1 gehaltene Bilderfassungseinrichtung 3. Auf ihrer in den Aufnahmeraum gerichteten Seite weist die Bilderfassungseinrichtung 3 einen optischen Sensor auf, mittels dem Bilder von der im Aufnahmeraum befindlichen Eintrittskante erstellt werden können.

Die Bilderfassungseinrichtung 3 ist mittels eines Schlittens 4 gradlinig bewegbar entlang einer vertikalen Abtaststrecke an dem Positionierkörper 1 gehalten. Der Schlitten 4 weist eine Durchgriffsöffnung auf, durch welche der Teilbereich der Bilderfassungseinrichtung 3, in welcher der optische Sensor vorgesehen ist, ragt, so dass der optische Sensor in den Aufnahmeraum gerichtet ist. Dem Schlitten 4 ist ein in der Figur nicht zu erkennender Elektromotor zugeordnet, über welchen der Schlitten 4 entlang der Abtaststrecke verfahren werden kann. Die Halterung des Schlittens 4 an dem Positionierköper 1 ist konstruktiv über zwei Halte- und Führungsstege 5a und 5b realisiert.

Damit der Blick der außenseitig an dem Positionierkörper 1 gehaltenen Bilderfassungseinrichtung 3 auf die in dem Aufnahmeraum vorgesehene Eintrittskante des Schaufelblattes 2 frei ist, weist der Positionierkörper 1 in seinem vorderen U-Schenkel 1a eine als Sichtfenster in den Aufnahmeraum dienende längliche Durchgriffsöffnung 6 auf. Durch die Durchgriffsöffnung 6 können von dem optischen Sensor der Bilderfassungseinrichtung 3 Bilder von der Eintrittskante gemacht werden. Die längliche Durchgriffsöffnung 6 erstreckt sich hier parallel zu der zu prüfenden Eintrittskante, so dass entlang der gesamten Abtaststrecke der Bilderfassungseinrichtung der Blick des optischen Sensors auf die zu prüfende der Eintrittskante frei ist.

Der optische Sensor der Bilderfassungseinrichtung 3 umfasst eine Photodiodenzeile, die orthogonal zu der Bewegungsrichtung der Bilderfassungseinrichtung 3 und somit zu der zu prüfenden Eintrittskante orientiert ist. Es ist ferner eine in der Figur nicht zu erkennende Stablinse vor der Photodiodenzeile vorgesehen, mittels derer in an sich bekannter Weise Licht auf die Photodiodenzeile gebündelt wird.

Schließlich umfasst die erfindungsgemäße Vorrichtung eine Steuerungseinrichtung 7, die über ein Kabel 8 mit der Bilderfassungseinrichtung 3 sowie dem Schlitten 4 verbunden ist. Die Steuerungseinrichtung 7 ist ausgebildet, um sowohl den optischen Sensor, als auch die Bewegung des Schlittens 4 entlang des Positionierkörpers 1 zu steuern.

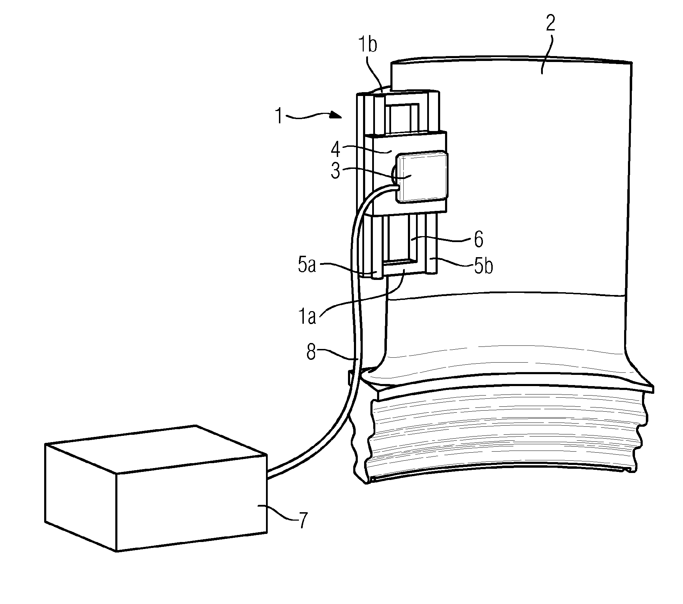

Zur Prüfung des Zustandes des Schaufelblattes 2 wird der Betrieb der Turbinenanlage, in welcher das Schaufelblatt 2 verwendet wird, zunächst unterbrochen. Der Positionierkörper 1 wird, wie in der Figur 1 dargestellt, um die Eintrittskante des Schaufelblattes 2 gelegt. Durch die an die Eintrittskante angepasste Geometrie ist der Positionierkörper 1 nur an einer genau vorgegebenen Position an die Kante legbar und wird dort gehalten.

Im Anschluss an die Anbringung des Positionierkörpers 1 können mittels der Bilderfassungseinrichtung 3 Bilder von der Oberfläche der Eintrittskante erstellt werden. Dazu wird die Bilderfassungseinrichtung 3, beginnend von dem unteren Ende der Abtaststrecke, entlang des Positionierkörpers 1 verfahren. Während des Verfahrens der Bilderfassungseinrichtung 3 werden von dem optischen Sensor, genau wie es bei einem Linearscanner der Fall ist, zeilenförmige Einzelaufnahmen der Oberfläche des Bauteils erstellt. Dabei wird von der Oberfläche der Eintrittskante reflektiertes Licht mittels der Stablinse auf die Photodiodenzeile gebündelt und detektiert. Von der Steuerungseinrichtung 7 werden die mit der optischen Detektion verbundenen Daten erfasst. Um eine ausreichende Ausleuchtung der Eintrittskante für den Detektionsvorgang zu gewährleisten, ist die Beleuchtungseinrichtung während des Abtastvorgangs eingeschaltet. Von der Bilderfassungseinrichtung 3 wird aus der Vielzahl von aufgenommen Bildern, die jeweils einen zeilenförmigen Ausschnitt des zu prüfenden Gesamtbereiches darstellen, ein zweidimensionales Gesamtbild erstellt. Über das erstellte Bild kann der Zustand der Eintrittskante, insbesondere der Verschleiß beurteilt werden.

Um die zeitliche Entwicklung des betriebsbedingten Verschleißes der Eintrittskante zu beurteilen, wird der Positionierkörper 1 mehrere Male, jeweils nach Ablauf einer vorgegebenen Betriebsdauer wieder an die vorgegebene Position an der Eintrittskante gelegt und es werden von der Bilderfassungseinrichtung 3 Bilder von der Eintrittskante aufgenommen. Die in zeitlichem Abstand erstellten Bilder werden insbesondere computergestützt miteinander verglichen und es kann eine qualitative Auswertung des Verschleißes sowie dessen zeitlicher Entwicklung erfolgen.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Vorrichtung zur visuellen Prüfung einer Eintritts- bzw. Austrittskante des Schaufelblatts (2) einer Turbinenschaufel, umfassend:
- wenigstens einen im Querschnitt eine U-förmige Grundform aufweisenden Positionierkörper (1), wobei zwischen den beiden U-Schenkeln (1a, 1b) ein Aufnahmeraum für den zu prüfenden Bereich der Eintritts- bzw. Austrittskante des Schaufelblattes (2) vorgesehen ist, dessen Innenkontur an die Außenkontur der Eintritts- bzw. Austrittskante des Schaufelblattes (2) angepasst bzw. anpassbar ist, so dass der Positionierköper (1) in einer vorgegebenen Position um die Eintritts- bzw. Austrittskante legbar ist, und
- eine Bilderfassungseinrichtung (3) mit wenigstens einem optischen Sensor, die an dem Positionierkörper (1) vorgesehen ist,
wobei die Bilderfassungseinrichtung (3) derart an dem Positionierkörper (1) angeordnet ist, dass der wenigstens eine optische Sensor in den Aufnahmeraum gerichtet ist, um Bilder von einer in dem Aufnahmeraum befindlichen Eintritts- bzw. Austrittskante erstellen zu können, und wobei die Bilderfassungseinrichtung (3) bewegbar an dem Positionierkörper (1) gehalten ist, so dass eine Abtaststrecke von dieser abgefahren werden kann.

2. Vorrichtung nach Anspruch 1,
**dadurch gekennzeichnet, dass**
die Bilderfassungseinrichtung (3) geradlinig bewegbar an dem Positionierkörper (1) gehalten ist.

3. Vorrichtung nach einem der vorhergehenden Ansprüche, **dadurch gekennzeichnet, dass**
die Bilderfassungseinrichtung (3) an einem Schlitten (4) vorgesehen ist, der entlang des Positionierkörpers (1) verfahrbar gehalten ist.

4. Vorrichtung nach Anspruch 3,
**dadurch gekennzeichnet, dass**
dem Schlitten (4) ein Antrieb, insbesondere ein Elektromotor zum automatischen Verfahren des Schlittens (4) zugeordnet ist.

5. Vorrichtung nach Anspruch 3 oder 4,
**dadurch gekennzeichnet, dass**
an dem Positionierkörper (1) zwei Halte- und Führungsstege (5a, 5b) vorgesehen sind, über welche der Schlitten (4) an dem Positionierkörper (1) bewegbar gehalten ist und geführt wird.

6. Vorrichtung nach einem der Ansprüche 3 bis 5,
**dadurch gekennzeichnet, dass**
die Bilderfassungseinrichtung (3) außenseitig an dem Positionierkörper (1) gehalten ist und der Positionierkörper (1) eine als Sichtfenster in den Aufnahmeraum dienende längliche Durchgriffsöffnung (6) aufweist, durch die von dem wenigstens einen optischen Sensor der Bilderfassungseinrichtung (3) Bilder von der Eintritts- bzw. Austrittskante gemacht werden können,
wobei sich die Durchgriffsöffnung (6) zumindest im Wesentlichen parallel zu der Bewegungsrichtung der Bilderfassungseinrichtung (3) erstreckt.

7. Vorrichtung nach einem der vorhergehenden Ansprüche,
**dadurch gekennzeichnet, dass**
der optische Sensor der Bilderfassungseinrichtung (3) wenigstens eine Photodiodenzeile und insbesondere eine vor der Photodiodenzeile angeordnete Stablinse umfasst.

8. Vorrichtung nach Anspruch 7,
**dadurch gekennzeichnet, dass**
die Photodiodenzeile zumindest im Wesentlichen senkrecht zu der Bewegungsrichtung der Bilderfassungseinrichtung (3) entlang des Positionierkörpers (1) angeordnet ist.

9. Vorrichtung nach einem der vorhergehenden Ansprüche,
**dadurch gekennzeichnet, dass**
die Bilderfassungseinrichtung (3) eine Beleuchtungseinheit zur Beleuchtung der Eintritts- bzw. Austrittskante in dem zu prüfenden Bereich umfasst.

10. Vorrichtung nach einem der vorhergehenden Ansprüche,
**dadurch gekennzeichnet, dass**
die Bilderfassungseinrichtung (3) eine Kamera umfasst.

11. Vorrichtung nach einem der vorhergehenden Ansprüche,
**dadurch gekennzeichnet, dass**
die Bilderfassungseinrichtung (3) ausgebildet ist, um Bilder einer Auflösung von wenigstens 600 dpi zu erstellen.

12. Vorrichtung nach einem der vorhergehenden Ansprüche,
**dadurch gekennzeichnet, dass**
eine Steuerungseinrichtung (7) vorgesehen ist.

13. Vorrichtung nach Anspruch 12,
**dadurch gekennzeichnet, dass**
die Steuerungseinrichtung (7) ausgebildet ist, um die Bilderfassungseinrichtung (3), insbesondere den wenigstens einen optischen Sensor zu steuern.

14. Vorrichtung nach Anspruch 12 oder 13,
**dadurch gekennzeichnet, dass**
die Steuerungseinrichtung (7) ausgebildet ist, um die Bewegung der Bilderfassungseinrichtung (3) zu steuern.

15. Vorrichtung nach einem der vorhergehenden Ansprüche,
**dadurch gekennzeichnet, dass**
der Positionierkörper (1) mittels eines Stereolithografie-Verfahrens hergestellt oder herstellbar ist.

16. Vorrichtung nach einem der vorhergehenden Ansprüche,
**dadurch gekennzeichnet, dass**
der Positionierkörper (1) aus wenigstens einem Material hergestellt oder herstellbar ist, welches durch eine Behandlung mittels ultraviolettem Licht härtbar ist.

17. Vorrichtung nach einem der vorhergehenden Ansprüche,
**dadurch gekennzeichnet, dass**
der Positionierkörper (1) aus wenigstens einem Epoxidharz hergestellt oder herstellbar ist.

18. Vorrichtung nach einem der vorhergehenden Ansprüche,
**dadurch gekennzeichnet, dass**
der Positionierkörper (1) mehrteilig ausgebildet ist.

19. Verfahren zur visuellen Prüfung einer Eintritts- bzw. Austrittskante des Schaufelblatts (2) einer Turbinenschaufel, umfassend die folgenden Schritte:
1) eine Vorrichtung nach einem der Ansprüche 1 bis 18 wird bereitgestellt,
2) der Positionierkörper (1) wird an dem zu prüfenden Bereich des Schaufelblatts (2) vorgesehen, so dass die Bilderfassungseinrichtung (3) in einer vorgegebenen Position an der Eintritts- bzw. Austrittskante positioniert wird,
3) mit dem wenigstens einen optischen Sensor der Bilderfassungseinrichtung (3) werden Bilder von der Eintritts- bzw. Austrittskante gemacht, wobei die Bilderfassungseinrichtung (3) entlang des Positionierkörpers (1) insbesondere geradlinig bewegt wird, um den gesamten zu prüfenden Bereich zu erfassen, und
4) die mit der Bilderfassungseinrichtung (3) gemachten Bilder werden von der Steuerungseinrichtung (7) verarbeitet, insbesondere zu einem Gesamtbild der Oberfläche der Eintritts- bzw. Austrittskante des Schaufelblatts (2) in dem geprüften Bereich zusammengefügt und ausgegeben.

20. Verfahren nach Anspruch 19,
**dadurch gekennzeichnet, dass**
die Schritte 1 bis 4 mehrere Male jeweils nach Ablauf einer vorgegebenen Betriebsdauer an dem gleichen Schaufelblatt (2) wiederholt werden und die jeweils aufgenommenen Bilder bzw. und/oder die daraus erstellten Gesamtbilder miteinander verglichen werden, um die zeitliche Entwicklung des Zustandes, insbesondere der Abnutzung der Eintritts- bzw. Austrittskante zu prüfen.

21. Verfahren nach Anspruch 20,
**dadurch gekennzeichnet, dass**
der Vergleich der Bilder und/oder Gesamtbilder computergestützt erfolgt.

22. Positionierkörper (1),
insbesondere zur Positionierung einer Bilderfassungseinrichtung (3) an einer vorgegebenen Position an einer zu prüfenden Eintritts- bzw. Austrittskante des Schaufelblatts (2) einer Turbinenschaufel, der im Querschnitt eine U-förmige Grundform aufweist,
wobei zwischen den beiden U-Schenkeln (1a, 1b) ein Aufnahmeraum für den zu prüfenden Bereich der Eintritts- bzw. Austrittskante des Schaufelblattes (2) vorgesehen ist, dessen Innenkontur an die Außenkontur der Eintritts- bzw. Austrittskante des Schaufelblattes (2) angepasst bzw. anpassbar ist, so dass der Positionierköper (1) in einer vorgegebenen Position um die Eintritts- bzw. Austrittskante legbar ist.

23. Verfahren zur Herstellung eines Positionierkörpers gemäß Anspruch 22, umfassend die folgenden Schritte:
- wenigstens ein im Querschnitt eine U-förmige Grundform aufweisender Grundkörper, der zwischen den beiden U-Schenkeln ein Aufnahmeraum für den zu prüfenden Bereich der Eintritts- bzw. Austrittskante des Schaufelblattes aufweist, wird bereitgestellt, wobei der Grundkörper zumindest im Bereich des Aufnahmeraums aus einem weichen Material besteht, welches insbesondere mittels UV-Strahlung aushärtbar ist,
- der Grundkörper wird derart an eine vorgegebenen Position des zu prüfenden Schaufelblattes (2) gelegt, dass das weiche Material an die Außenkontur der Eintritts- bzw. Austrittskante in dem zu prüfenden Bereich angepasst wird,
- der Grundkörper wird von der Eintritts- bzw. Austrittskante entfernt, und
- das weiche Material wird insbesondere mittels UV-Strahlung ausgehärtet, um einen passgenau an die Außenkontur der Eintritts- bzw. Austrittskante angepassten Positionierkörper (1) zu erhalten.
